# EUROPEAN PATENT APPLICATION

(11) **EP 4 601 069 A1**
(43) Date of publication of application: **13.08.2025**
(21) Application number: 23898011.4
(22) Date of filing: 08.09.2023
(51) Int. Cl.: H01M 10/0585, H01M 10/04, H01M 50/105

(54) **ELECTRODE ASSEMBLY AND SECONDARY BATTERY COMPRISING SAME ELECTRODE ASSEMBLY**

(30) Priority: 01.12.2022 KR 20220166012
(71) Applicant: LG Energy Solution, Ltd., Seoul 07335 (KR)
(72) Inventor: KIM, Seung Cheol, Daejeon 34122 (KR); KIM, Ki Woong, Daejeon 34122 (KR)
(74) Representative: Plasseraud IP
(86) International application number: PCT/KR2023/013478
(87) International publication number: WO 2024/117477

(57) **Abstract**

An electrode assembly according to an embodiment of the present invention may be provided by alternately stacking elenglisctrodes and separators in a predetermined stacking direction, wherein, when an electrode, which is disposed at the outermost side, of the electrodes is defined as the outermost electrode, and a separator, which is disposed at the outermost side, of the separators is defined as the outermost separator, a distal end portion of the outermost separator may be provided to press a distal end portion of the outermost electrode inward in the stacking direction.

## Description

### TECHNICAL FIELD

### CROSS-REFERENCE TO RELATED APPLICATION

The present application claims the benefit of the priority of Korean Patent Application No. 10-2022-0166012, filed on December 1, 2022, which is hereby incorporated by reference in its entirety.

### TECHNICAL FIELD

The present invention relates to an electrode assembly and a secondary battery including the electrode assembly.

### BACKGROUND ART

In order to solve problems of environmental pollution caused by excessive use of fossil fuels and the energy problems due to the depletion of the fossil fuels, research and development on electric power production based on eco-friendly energy are being conducted. Recently, research on secondary batteries that can be repeatedly charged has been actively conducted, and research is being conducted on various aspects such as materials, structures, processes, stability, and durability of secondary batteries.

The secondary battery has an electrode assembly therein, and the electrode assembly may be formed by alternately stacking electrodes having different polarities and separators. The secondary battery produces electrical energy based on electrochemical reaction that occurs in an electrode assembly, and the electrochemical reaction may involve movement of ions (e.g., lithium ions).

According to the related art, there is possibility that lithium precipitation occurs as resistance increases as excitation occurs between the electrodes and the separator. When the lithium precipitation continues, problems may arise in safety and durability of the secondary battery.

### DISCLOSURE OF THE INVENTION

### TECHNICAL PROBLEM

An object of the present invention for solving the above problems is to provide an electrode assembly in which delamination between electrodes and separators is effectively suppressed to improve safety and durability of the secondary battery, and a secondary battery including the electrode assembly.

### TECHNICAL SOLUTION

An electrode assembly according to an embodiment of the present invention may be provided by alternately stacking electrodes and separators in a predetermined stacking direction, wherein, when an electrode, which is disposed at the outermost side, of the electrodes is defined as the outermost electrode, and a separator, which is disposed at the outermost side, of the separators is defined as the outermost separator, a distal end portion of the outermost separator may be provided to press a distal end portion of the outermost electrode inward in the stacking direction.

A secondary battery according to an embodiment of the present invention may include: an electrode assembly; and a case configured to surround the electrode assembly so as to define an outer portion of the electrode assembly, wherein the electrode assembly may be provided so that electrodes and separators are alternately stacked in a predetermined stacking direction, and when an electrode, which is disposed at the outermost side, of the electrodes is defined as the outermost electrode, and a separator, which is disposed at the outermost side, of the separators is defined as the outermost separator, a distal end portion of the outermost separator may be provided to press a distal end portion of the outermost electrode inward in the stacking direction.

### ADVANTAGEOUS EFFECTS

According to the preferred embodiment of the present invention, the delamination between the electrodes and the separators may be effectively suppressed.

According to the preferred embodiment of the present invention, the safety and durability of the secondary battery may be improved.

### BRIEF DESCRIPTION OF THE DRAWINGS

FIG. 1 is a plan view of a secondary battery according to an embodiment of the present invention.
FIG. 2 is a plan view illustrating a configuration of an electrode assembly when viewed from the above according to an embodiment of the present invention.
FIG. 3 is a side view illustrating a longitudinal cross-section of the electrode assembly according to an embodiment of the present invention.
FIG. 4 is a side cross-sectional view illustrating a longitudinal cross-section of an electrode assembly according to a first embodiment of the present invention.
FIG. 5 is a side cross-sectional view illustrating a longitudinal cross-section of a secondary battery according to the first embodiment of the present invention.
FIG. 6 is a side cross-sectional view illustrating a longitudinal cross-section of an electrode assembly according to a second embodiment of the present invention.
FIG. 7 is a side cross-sectional view illustrating a longitudinal cross-section of a secondary battery according to the second embodiment of the present invention.
FIG. 8 is a side cross-sectional view illustrating a longitudinal cross-section of an electrode assembly according to a third embodiment of the present invention.
FIG. 9 is a side cross-sectional view illustrating a longitudinal cross-section of a secondary battery according to the third embodiment of the present invention.
FIG. 10 is a side cross-sectional view illustrating a longitudinal cross-section of an electrode assembly according to a fourth embodiment of the present invention.
FIG. 11 is a side cross-sectional view illustrating a longitudinal cross-section of a secondary battery according to the fourth embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

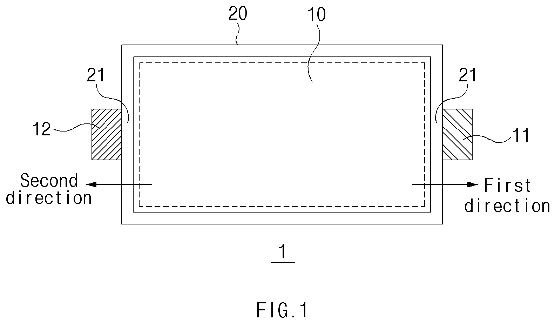

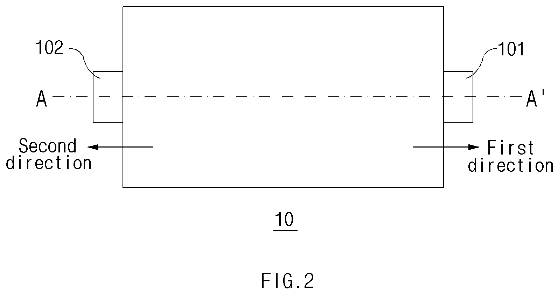

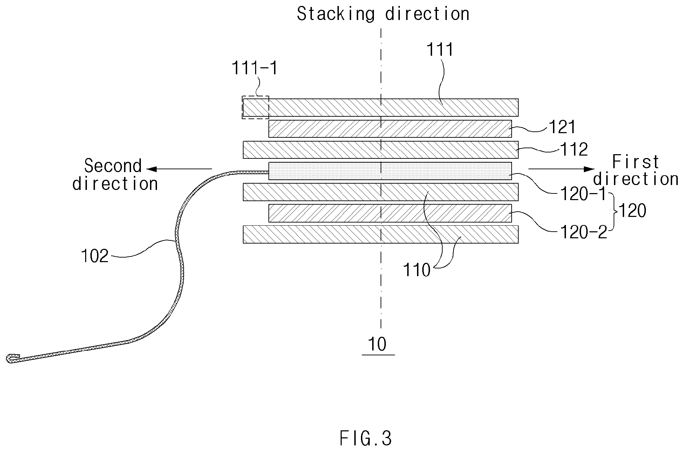

FIG. 1 is a plan view of a secondary battery 1 according to an embodiment of the present invention, FIG. 2 is a plan view illustrating a configuration of an electrode assembly 10 when viewed from the above according to an embodiment of the present invention, and FIG. 3 is a side view illustrating a longitudinal cross-section of the electrode assembly 10 according to an embodiment of the present invention.

When described with reference to FIG. 1, the secondary battery 1 may include the electrode assembly 10. For example, the electrode assembly 10 may be prepared by alternately stacking electrodes and separators in a predetermined stacking direction.

The secondary battery 1 may include electrode leads (e.g., reference numerals 11 and 12). For example, the first electrode lead 11 and the second electrode lead 12 may be electrically connected to the electrode assembly 10. Each of the first electrode lead 11 and the second electrode lead 12 may be electrically connected to the electrodes (e.g., negative electrodes and positive electrodes) of the electrode assembly 10, i.e., be electrodes having different polarities.

The secondary battery 1 may include a case 20. For example, the case 20 may be provided to surround the electrode assembly 10. In addition, the case 20 may define an outer appearance of the secondary battery 1. For example, each of the first electrode leads 11 and the second electrode lead 12 may protrude to the outside of the case 20. The first electrode lead 11 and the second electrode lead 12 protrude to the outside to electrically connect the outside of the secondary battery 1 to the electrode assembly 10.

The case 20 may include a sealing part 21. For example, the sealing part 21 may be disposed on an edge of the case 20. The sealing part 21 may suppress communication between the inside and outside of the secondary battery 1. For another example, the first electrode lead 11 and the second electrode lead 12 may pass through the sealing part 21 to protrude to the outside.

When described with reference to FIG. 2, the electrode assembly 10 may include electrode tabs (e.g., reference numerals 101 and 102). For example, the first electrode tab 101 and the second electrode tab 102 may be electrically connected to the electrode assembly 10. Each of the first electrode tab 101 and the second electrode tab 102 may be electrically connected to the electrodes (e.g., negative electrodes and positive electrodes) of the electrode assembly 10, i.e., be electrodes having different polarities. For another example, the first electrode tab 101 and the second electrode tab 102 may be electrically connected to the first electrode lead 11 and the second electrode lead 12, respectively. In other words, each of the first electrode lead 11 and the second electrode lead 12 may be electrically connected to the electrode assembly 10 through the first electrode tab 101 and the second electrode tab 102, respectively.

When described with reference to FIG. 3, the electrode assembly 10 may be in a stacked form. The electrode assembly 10 may be prepared by alternately stacking the electrodes and the separators along a stacking direction.

The electrodes may include first electrodes 120-1 and second electrodes 120-2. For example, the first electrodes 120-1 may be electrodes connected to the first electrode tab 101 that protrudes in a predetermined first direction. The second electrodes 120-2 may be connected to the second electrode tab 102 protruding in a second direction different from the first direction (e.g., the opposite direction) and have a polarity opposite to that of the first electrodes.

The electrodes may include the outermost electrode 121. For example, an electrode disposed at the outermost side of the electrodes may be defined as the outermost electrode 121. For another example, the outermost electrode 121 may be one of the first electrodes 120-1.

The separators may include the outermost separator 111. For example, in the separators, the separator disposed outside the outermost electrode 121 may be defined as the outermost separator 111.

A distal end portion 111-1 of the outermost separator 111 may be a distal end portion of the outermost separator 111 in the second direction in which the second electrode tab 102 protrudes.

The separators may include a stacked separator 112. For example, in the separators, the separator disposed below the outermost electrode 121 may be defined as the stacked separator 112. In other words, the outermost electrode 121 may be disposed between the outermost separator 111 and the stacked separator 112.

The electrode assembly 10 may include inner separators 110. For example, the inner separators 110 may refer to separators other than the outermost separator 111 and the stacked separator 112 in the separators. For another example, the inner separators 110 may be separators that are stacked on the inner electrode 120, which is an electrode other than the outermost electrode 121 in the electrodes, but are not on the outermost electrode 121.

The electrode assembly 10 may include the inner electrodes 120. For example, the inner electrodes 120 may refer to electrodes other than the outermost electrode 121 in the first electrodes 120-1 and the second electrodes 120-2.

The above-described terms are examples for convenience of explanation, and the understanding does not necessarily need to be limited to the above-described terms.

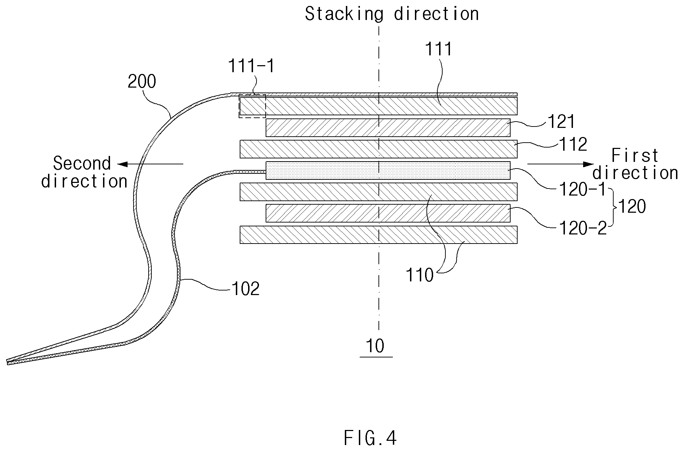

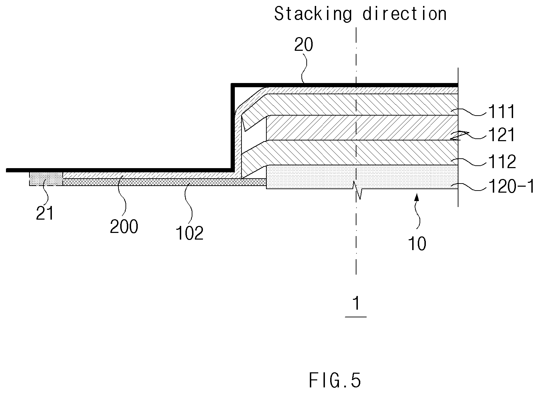

FIG. 4 is a side cross-sectional view illustrating a longitudinal cross-section of an electrode assembly according to a first embodiment of the present invention, and FIG. 5 is a side cross-sectional view illustrating a longitudinal cross-section of a secondary battery according to the first embodiment of the present invention. The above-described longitudinal sections may be longitudinal cross-sections taken along line A-A' in FIG. 2. The above descriptions may be also applied equally or similarly to this embodiment.

Referring to FIG. 4, an electrode assembly 10 may include a pressing member 200. For example, the pressing member 200 may be disposed on the outside of the outermost separator 111 to cover a distal end portion 111-1 of at least the outermost separator 111. In addition, the pressing member 200 may be disposed to cover an area other than the distal end portion 111-1 of the outermost separator 111.

The pressing member 200 may be provided to press the distal end portion 111-1 of the outermost separator 111 inward in a stacking direction. For example, the inside of the stacking direction may be a direction from the outermost separator 111 to an inner separator 110. Specifically, the pressing member 200 may press the distal end portion 111-1 of the outermost separator 111 inward in the stacking direction, and presses the distal end portion of the outermost electrode 121 inward in the stacking direction. In other words, the distal end portion 111-1 of the outermost separator 111 may be pressed by the pressing member 200 to press the distal end portion of the outermost electrode 121 inward in the stacking direction.

The pressing member 200 may protrude in a second direction. For example, the pressing member 200 may be stacked on the outside of the outermost separator 111 to protrude in the second direction, thereby pressing the distal end portion of the outermost separator 111 and the distal end portion of the outermost electrode 121 inward in the stacking direction. The delamination of the outermost separator 111 and the outermost electrode 121 may be suppressed due to the pressing of the pressing member 200 to improve contact force.

The pressing member 200 may include a metal member. For example, the metal member may include the same material as a second electrode tab 102. When the pressing member 200 includes the same metal material as the second electrode tab 102, the pressing member 200 and the second electrode tab 102 may be easily coupled to each other.

An end of the pressing member 200 may be coupled to the second electrode tab 102. For example, the pressing member 200 may extend in the second direction, and the end may be coupled to an end of at least the second electrode tab 102. The pressing member 200 may be coupled and fixed to the second electrode tab 102 to maintain the pressed state of the outermost separator 111.

Referring to FIG. 5, the pressing member 200 may be disposed between a case 20 and the outermost separator 111. For example, the pressing member 200 may be disposed between an inner surface of the case 20 and the outermost separator 111 and cover the distal end portion of at least the outermost separator 111.

The inner surface of the case 20 may be provided to press the pressing member 200. For example, the inner surface of the case 20 may press the pressing member 200, and the pressing member 200 may press the outermost separator 111 to further suppress delamination of the outermost separator 111 and the outermost electrode 121, thereby maximizing the contact force. Thus, safety and durability of the secondary battery 1 including the electrode assembly 10 may be improved.

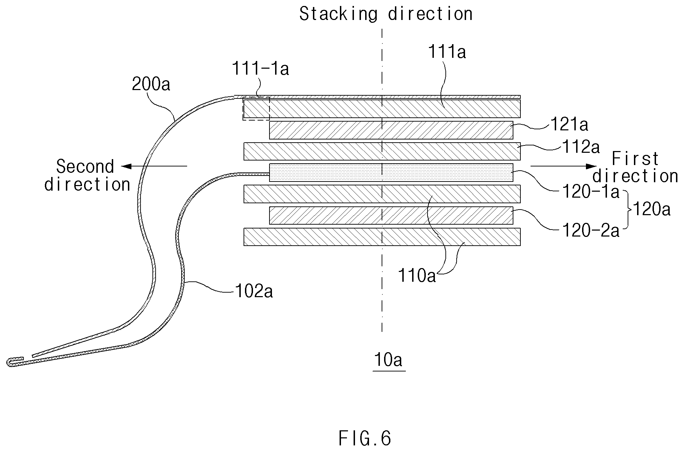

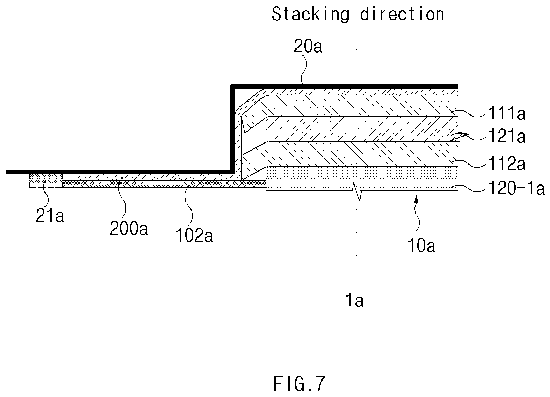

FIG. 6 is a side cross-sectional view illustrating a longitudinal cross-section of an electrode assembly according to a second embodiment of the present invention, and FIG. 7 is a side cross-sectional view illustrating a longitudinal cross-section of a secondary battery according to the second embodiment of the present invention. The above-described longitudinal sections may be longitudinal cross-sections taken along line A-A' in FIG. 2. The above descriptions may be also applied equally or similarly to this embodiment.

Referring to FIG. 6, a pressing member 200a may include an insulating member. For example, the pressing member 200a may include the insulating member and may extend in a second direction to provide an overlapping area overlapped with a second electrode tab 102a when viewed in a stacking direction. The pressing member 200a may be disposed to provide the overlapping area with the second electrode tab 102a between the second electrode tab 102a and a case 20, thereby insulating the second electrode tab 102a from the case 20.

Referring to FIG. 7, movement of the pressing member 200a may be restricted by a case 20a. For example, the pressing member 200a may be in contact with an inner surface of the case 20a, and the movement may be restricted by frictional force with the inner surface. When the movement of the pressing member 200a is restricted, the pressing on the outermost separator 111 of the pressing member 200a may be effectively maintained.

The pressing member 200a may press the outermost separator 111a by the case 20a. For example, the pressing member 200a may be pressed by the inner surface of the case 20a, and the pressing member 200a may press the outermost separator 111a inward in the stacking direction. Specifically, the pressing member 200a may press a distal end portion 111-1a of at least the outermost separator 111a to suppress delamination between the outermost separator 111 and the outermost electrode 121.

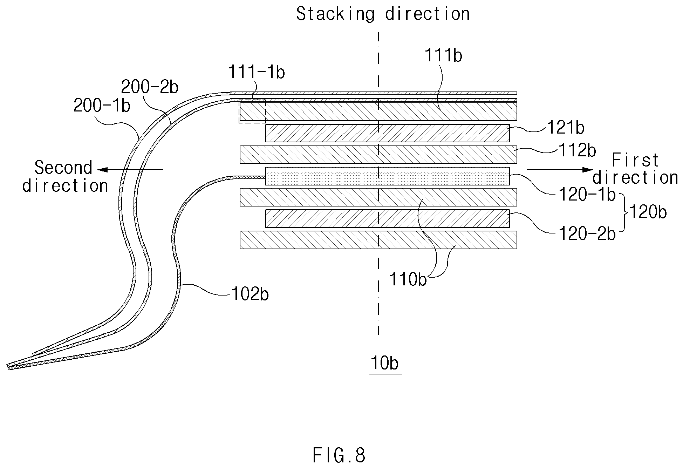

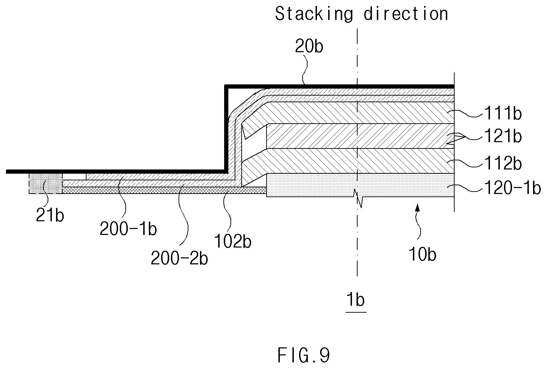

FIG. 8 is a side cross-sectional view illustrating a longitudinal cross-section of an electrode assembly according to a third embodiment of the present invention, and FIG. 9 is a side cross-sectional view illustrating a longitudinal cross-section of a secondary battery according to the third embodiment of the present invention. The above-described longitudinal sections may be longitudinal cross-sections taken along line A-A' in FIG. 2. The above descriptions may be also applied equally or similarly to this embodiment.

An electrode assembly 10b may include a plurality of pressing members (e.g., 200-1b, 200-2b).

The electrode assembly 10b may include a first pressing member 200-1b. The first pressing member 200-1b may be stacked on the outside of the second pressing member 200-2b, which will be described later. The first pressing member 200-1b may include an insulating member.

The electrode assembly 10b may include a second pressing member 200-2b. For example, the second pressing member 200-2b may be disposed on the outermost separator 111b. Specifically, the second pressing member 200-2b may be stacked on the outside of the outermost separator 111b to cover a distal end portion 111b-1b of the outermost separator 111b. The second pressing member 200-2b may include a metal member. In addition, the second pressing member 200-2b may be coupled to a second electrode tab 102b.

The above-described first pressing member 200-1b may correspond to the pressing member 200 of FIGS. 4 and 5, and the second pressing member 200-2b may correspond to the pressing member 200a of FIGS. 6 and 7.

The electrode assembly 10b may be provided with a plurality of pressing members (e.g., 200-1b and 200-2b) to effectively suppress delamination between the outermost separator 111b and the outermost electrode 121b. For example, the first pressing member 200-1b may press the second pressing member 200-2b while insulating the second pressing member 200-2b from a case 20b. In addition, the second pressing member 200-2b may be coupled and fixed to the second electrode tab 102b. The second pressing member 200-2b may press the outermost separator 111b to suppress delamination of the outermost separator 111b and the outermost electrode 121b.

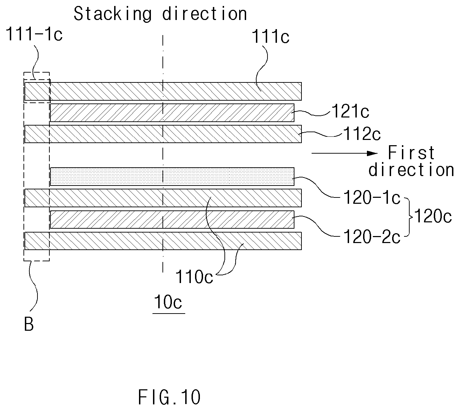

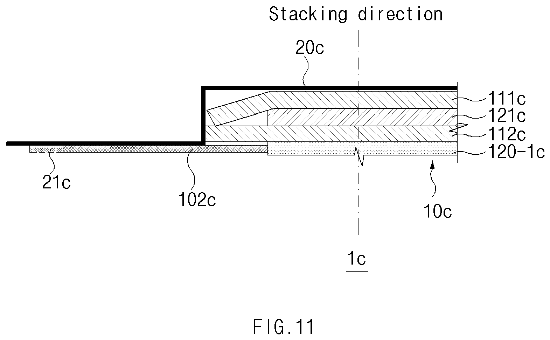

FIG. 10 is a side cross-sectional view illustrating a longitudinal cross-section of an electrode assembly according to a fourth embodiment of the present invention, and FIG. 11 is a side cross-sectional view illustrating a longitudinal cross-section of a secondary battery according to the fourth embodiment of the present invention. The above-described longitudinal sections may be longitudinal cross-sections taken along line A-A' in FIG. 2. The above descriptions may be also applied equally or similarly to this embodiment.

Separators of an electrode assembly 10c may be bonded to each other. For example, the outermost separator 111c and the stacked separator 112c may be bonded to each other. Specifically, for example, a distal end 111-1c of the outermost separator 111c and the stacked separator 112c (or a distal end of the stacked separator 112c) may be bonded to each other. For another specific example, the outermost separator 111c and an inner separator 110c (or an distal end portion of the inner separator 110c) may be bonded to each other.

The bonding between the separators may not be limited to the above-mentioned example, and may also be implemented by other combinations of bonding that is capable of pulling the outermost separator 111c inward in the stacking direction.

The separators of the electrode assembly 10c may be bonded to each other to pull the distal end portion 111-1c of the outermost separator 111c inward in the stacking direction. In other words, the distal end portion 111-1c of the outermost separator 111c may be pulled inward in the stacking direction together with the distal end portion of the outermost electrode 121c. In this case, the distal end portion of the outermost electrode 121c may be pressed by the distal end portion 111-1c of the outermost separator 111c.

As described above, the delamination between the outermost separator 111c and the outermost electrode 121 may be suppressed through the bonding between the separators.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

1, 1a, 1b, 1c: Secondary battery
10, 10a, 10b, 10c: Electrode assembly
11: First electrode lead
12: Second electrode lead
20, 20a, 20b, 20c: Case
21, 21a, 21b, 21c: Sealing part
101, 101a, 101b, 101c: First electrode tab
102, 102a, 102b, 102c: Second electrode tab
110, 110a, 110b, 110c: Inner separator
111, 111a, 111b, 111c: The outermost separator
111-1, 111-1a, 111-1b, 111-1c: Distal end portion of the outermost separator
112, 112a, 112b, 112c: Stacked separator
120, 120a, 120b, 120c: Inner electrode
120-1, 120-1a, 120-1b, 120-1c: First electrode
120-2, 120-2a, 120-2b, 120-2c: Second electrode
121, 121a, 121b, 121c: The outermost electrode
200, 200a: Pressing member
200-1b: First pressing member
200-2b: Second pressing member

## Claims

1. An electrode assembly in which electrodes and separators are alternately stacked in a predetermined stacking direction,
wherein, when an electrode, which is disposed at the outermost side, of the electrodes is defined as the outermost electrode, and a separator, which is disposed at the outermost side, of the separators is defined as the outermost separator,
a distal end portion of the outermost separator is provided to press a distal end portion of the outermost electrode inward in the stacking direction.

2. The electrode assembly of claim 1, further comprising a pressing member provided to press a distal end portion of at least the outermost separator at the outside of the outermost separator and press the distal end portion of the outermost separator inward in the stacking direction,
wherein the distal end portion of the outermost separator is configured to press the distal end portion of the outermost electrode inward in the stacking direction by the pressing member.

3. The electrode assembly of claim 2, wherein the pressing member comprises:
a metal member stacked on the outside of the outermost separator to cover the distal end portion of the outermost separator; and
an insulating member stacked on the outside of the metal member.

4. The electrode assembly of claim 1, wherein the electrode comprise:
first electrodes connected to a first electrode tab protruding in a predetermined first direction; and
second electrodes which are connected to a second electrode tab protruding in a second direction different from the first direction and each of which has a polarity opposite to that of each of the first electrodes,
wherein the outermost electrode is one of the first electrodes, and
the distal end portion of the outermost separator is a distal end portion of the outermost separator in the second direction, from which the second electrode tab protrudes.

5. The electrode assembly of claim 4, further comprising a pressing member stacked on the outside of the outermost separator to protrude in the second direction and provided to press the distal end portion of the outermost separator and the distal end portion of the outermost electrode inward the stacking direction.

6. The electrode assembly of claim 5, wherein the pressing member comprises a metal member extending in the second direction and provided so that a distal end thereof is coupled to a distal end of the second electrode tab.

7. The electrode assembly of claim 6, wherein the metal member is made of the same material as the second electrode tab.

8. The electrode assembly of claim 5, wherein the pressing member comprises an insulating member extending in the second direction to provide an overlapping area overlapped with the second electrode tab when viewed in the stacking direction.

9. The electrode assembly of claim 1, wherein the distal end portion of the outermost separator is coupled to a distal end portion of an inner separator, which is a separator that is not stacked on the outermost electrode, such that the distal end portion of the outermost separator is pressed to be pulled inward in the stacking direction together with the distal end portion of the outermost electrode.

10. A secondary battery comprising:
an electrode assembly; and
a case configured to surround the electrode assembly so as to define an outer portion of the electrode assembly,
wherein the electrode assembly is provided so that electrodes and separators are alternately stacked in a predetermined stacking direction, and
when an electrode, which is disposed at the outermost side, of the electrodes is defined as the outermost electrode, and a separator, which is disposed at the outermost side, of the separators is defined as the outermost separator, a distal end portion of the outermost separator is provided to press a distal end portion of the outermost electrode inward in the stacking direction.

11. The secondary battery of claim 10, further comprising a pressing member disposed between an inner surface of the case and the outermost separator, configured to cover a distal end portion of at least the outermost separator, and provided to press the distal end portion of the outermost separator inward in the stacking direction.

12. The secondary battery of claim 11, wherein the pressing member is in contact with the inner surface and is restricted in movement by frictional force with the inner surface.

13. The secondary battery of claim 11, wherein the pressing member is pressed inward in the stacking direction by the inner surface.
